# EUROPÄISCHE PATENTANMELDUNG

(11) **EP 2 781 695 A1**
(43) Veröffentlichungstag der Anmeldung: **24.09.2014**
(21) Anmeldenummer: 13160606.3
(22) Anmeldetag: 22.03.2013
(51) Int. Cl.: F01D 9/04, F02C 6/12

(54) **Leitvorrichtung einer Abgasturbine**

(71) Anmelder: ABB Turbo Systems AG, 5400 Baden (CH)
(72) Erfinder: Joho, Marcel, 5105 Auenstein (CH); Jarusel, Matthias, 79774 Albbruck (DE)
(74) Vertreter: ABB Patent Attorneys

(57) **Zusammenfassung**

Der Düsenring für die Axialturbine eines Abgasturboladers umfasst einen inneren Ring (72) und einen äusseren Ring (71) sowie eine Vielzahl zwischen dem inneren und dem äusseren Ring befestigte Leitschaufeln (70). Die Leitschaufeln sind zumindest teilweise mit unterschiedlichen Abständen zueinander angeordnet. Zumindest an einem der beiden Ringe (71, 72) ist mindestens ein Positionierungsmittel (75) vorgesehen, anhand dessen, wenn es in axialer Richtung in ein entsprechendes Positionierungsmittel an einem Gaseintrittsgehäuse eingeschoben ist, die Lage des Düsenrings bezüglich des Gaseintrittsgehäuses eindeutig festlegen lässt.

Die Positionierungsmittel erlauben es, die Leitvorrichtung in axialer Richtung in das Turbinengehäuse einzuschieben, und dabei die vorgesehene Winkellage einzuhalten. Vorteilhafterweise wird die Positionierung mittels mindestens einer Nocke und einer in der Nocke in Grösse und Form entsprechenden Nut realisiert. Dabei können Nocke und Nut wahlweise je an einem der beiden Bauteile angeordnet sein.

## Beschreibung

### Technisches Gebiet

Die Erfindung bezieht sich auf das Gebiet der mit Abgasen von Brennkraftmaschinen beaufschlagten Turbolader.

Sie betrifft die Axialturbine eines Abgasturboladers mit einem als eine Einheit entnehmbaren Rotorblock, sowie eine Leitvorrichtung für eine Axialturbine eines derartigen Abgasturboladers.

### Stand der Technik

Abgasturbolader werden zur Leistungssteigerung von Hubkolbenmotoren eingesetzt. Diese Abgasturbolader verwenden eine Turbine welche über eine Welle ein Verdichterrad antreibt. Bei Abgasturboladern mit axial angeströmten Abgasturbinen (in diesem Dokument hiernach kurz Axialturbine genannt, wobei diese Art von Axialturbinen eben gerade aufgrund des abströmseitigen Turbinendiffusors, welcher die Strömung in die radiale Richtung umlenkt nicht vergleichbar sein soll mit einer ein- oder mehrstufigen Axialturbine einer Gasturbine) ist der Turbinendiffusor in der Regel mechanisch - etwa über eine feste Schraubverbindung - mit dem Gasaustrittsgehäuse der Turbine gekoppelt. Dadurch entsteht die Notwendigkeit, beim Ausbau des Turbinenrades in Richtung des Verdichters den Turbinendiffusor vorab vom Gasaustrittsgehäuse zu lösen, was insbesondere bei eingerosteten oder anderswie verklemmten Befestigungsmitteln oder allein aufgrund der Zugänglichkeit der zu lösenden Befestigungsmittel durch die Öffnung im Lagergehäuse eine mühsame und zeitintensive Arbeit sein kann. Um den Ausbau sämtlicher, der Abgasströmung ausgesetzter Teile eines Abgasturboladers bei der Wartung zu vereinfachen, soll der gesamte Rotorblock - also alle rotierenden Teile und zugehörige Lagerbereiche - als Einheit aus dem Turbinengehäuse herausgenommen werden können. Ein entsprechendes Konzept, allerdings für Abgasturbolader mit Radialturbinen, wird in EP1057978 vorgestellt.

Bei Axialturbinen stellt sich das Problem der Demontage des stromaufwärts des Turbinenrades angeordneten Düsenrings. Bei herkömmlichen Axialturbinen wird der Düsenring in der Regel am Gaseintrittsgehäuse befestigt und muss bei der Montage / Demontage in einem zusätzlichen Schritt befestigt/ demontiert werden. Soll der Düsenring wie beim oben beschriebenen Design zusammen mit dem Rotorblock ein-und ausbaubar sein, kann der Düsenring nicht mehr am Gaseintrittsgehäuse befestigt werden. Stattdessen müssen Wege gefunden werden, um den Düsenring am Rotorblock zu befestigen. Eine Möglichkeit besteht darin, den Düsenring über den Diffusor und durch den Strömungskanal führende Streben mit dem Lagergehäuse zu verbinden.

Weist der Düsenring ungleich verteilte Leitschaufeln auf, wie dies im Stand der Technik verschiedentlich vorgeschlagen worden ist, ist eine Positionierung in der vorgesehenen Winkellage bezüglich des Gaseintrittsgehäuses wichtig. Wird der Düsenring direkt am Gaseintrittsgehäuse montiert, ist dies kein Problem, da der Düsenring bei der Montage ausgerichtet und dann befestigt werden kann. Wird der Düsenring nun aber nach erfolgtem Service am Rotorblock befestigt und mit diesem zusammen in das Gehäuse eingeschoben, ist nicht mehr gewährleistet, dass die Winkellage mit der Ausrichtung des Gaseintrittsgehäuses übereinstimmt. Immerhin lässt sich das Gaseintrittsgehäuse je nach Anbausituation in unterschiedlichen Winkellagen mit dem restlichen Turboladergehäuse befestigen. Eine nicht vorgesehene Ausrichtung kann jedoch zu einer Beeinträchtigung der Turbinenfunktion führen und ist daher unerwünscht.

### Kurze Darstellung der Erfindung

Die Aufgabe der vorliegenden Erfindung besteht darin, bei einer axial angeströmten Abgasturbine die mit dem Rotorblock verbundene Leitvorrichtung bezüglich dem Gaseintrittsgehäuse zu positionieren, ohne dass die Leitvorrichtung vorab am Gaseintrittsgehäuse befestigt werden muss.

Erfindungsgemäss wird dies dadurch erreicht, dass an der Leitvorrichtung Positionierungsmittel vorgesehen sind, mit denen sich die Leitvorrichtung bezüglich dem Gaseintrittsgehäuse positionieren lassen.

Die Positionierungsmittel erlauben es, die Leitvorrichtung in axialer Richtung in das Turbinengehäuse einzuschieben, und dabei die vorgesehene Winkellage einzuhalten. Vorteilhafterweise wird die Positionierung mittels mindestens einer Nocke und einer in der Nocke in Grösse und Form entsprechenden Nut realisiert. Dabei können Nocke und Nut wahlweise je an einem der beiden Bauteile angeordnet sein.

Sind in Umfangsrichtung mehrere Nocken und Nuten vorgesehen, werden diese vorteilhafterweise in ungleichen Abständen voneinander angeordnet, um eine eindeutige Winkellage zu gewährleisten.

Optional weisen die Nuten oder die Nocken Einschubhilfen in Form einer Anphasung auf, welche bei geringfügiger Abweichung von der übereinstimmenden Winkellage die Einführung der Nocken in den entsprechenden Nuten vereinfachen.

Optional weist der Düsenring an seinem inneren Befestigungsring einen Dichtungsvorsprung auf, welcher im kalten Zustand der Abgasturbine mit radialem Spiel in axialer Überlappung zu einem Dichtungsvorsprung am Gaseintrittsgehäuse angeordnet ist. Erhitzt sich im Betrieb der Düsenring stärker als das Gaseintrittsgehäuse, dehnt sich der innere Befestigungsring stärker in radialer Richtung als das Gaseintrittsgehäuse, so dass die beiden Dichtungsvorsprünge nunmehr in radialer Richtungen gegeneinander gepresst werden, wodurch sich eine Dichtstelle zwischen Gaseintrittsgehäuse und Düsenring ergibt.

Weitere Vorteile ergeben sich aus den abhängigen Ansprüchen oder sind der detaillierten Beschreibung der Ausführungsbeispiele zu entnehmen.

### Kurze Beschreibung der Zeichnungen

Nachfolgend werden verschiedene Ausführungsformen der Erfindung anhand von Zeichnungen detailliert erläutert. Hierbei zeigt
- Fig. 1: eine Ansicht eines teilweise aufgeschnittenen Abgasturboladers gemäss dem Stand der Technik, mit einer axial angeströmten Turbine (Axialturbine) mit radialem Gaseintritt und einem Radialverdichter,
- Fig. 2: einen entlang der Achse geführten Schnitt durch eine axial angeströmte Abgasturbine eines Abgasturboladers gemäss dem Stand der Technik, und
- Fig. 3: eine vergrösserte Ansicht des Einströmbereichs einer axial angeströmten Abgasturbine mit einem erfindungsgemäss gegenüber dem Gaseintrittsgehäuse positionierten Düsenring.

### Weg zur Ausführung der Erfindung

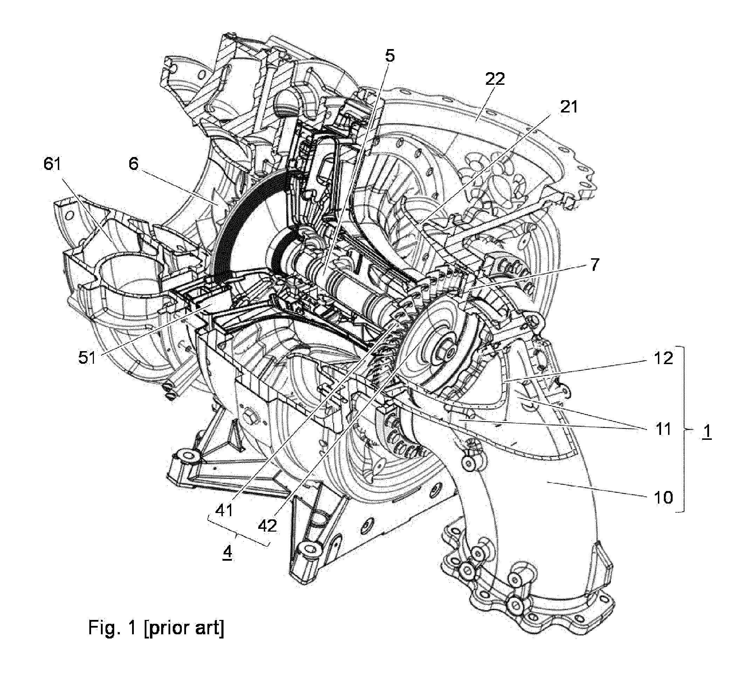

Fig 1. zeigt einen teilweise aufgeschnittenen Abgasturbolader gemäss dem Stand der Technik. Im rechten, vorderen Bereich befindet sich das Turbinenrad 4, welches über die Welle 5 mit dem Verdichterrad 6 verbunden ist. Das Verdichterrad ist in dem Verdichtergehäuse 61 angeordnet. Die Welle 5 ist im Lagergehäuse 51 gelagert.

Das Turbinenrad 4 umfasst eine mit der Welle verbundene Nabe 42 sowie eine Vielzahl von Laufschaufeln 41, welche mit der Nabe verbunden sind. Die Laufschaufeln können form- oder kraftschlüssig mit der Nabe verbunden sein. Alternativ kann das Turbinenrad samt Nabe und Laufschaufeln einteilig ausgebildet sein.

Das Turbinengehäuse umfasst ein Gaseintrittsgehäuse 11, welches das heisse Abgas aus den Brennkammern der Brennkraftmaschine über die Leitvorrichtung 7 auf die Laufschaufeln 41 des Turbinenrades 4 leitet. Stromabwärts des Turbinenrads durchströmt das Abgas einen Diffusor und wird anschliessend im Gasaustrittsgehäuse 22 gesammelt und zur Auspuffanlage geführt.

Das Gaseintrittsgehäuse 1 einer Axialturbine umfasst eine äussere Gehäusewand 10, welche den Strömungskanal radial aussen umfasst. Zusätzlich umfasst das Gaseintrittsgehäuse 1 im inneren Bereich eine haubenförmige, innere Gehäusewand (Kalotte) 12, welche die Nabe des Turbinenrades abdeckt und den Abgasstrom aus der rohrförmigen Zuleitung in eine ringrohrförmige Strömung aufteilt. Die äussere Gehäusewand bildet im Übergangsbereich zum Turbineneintritt eine kreisförmige Austrittsöffnung. Zusammen mit der koaxial angeordneten, kreisförmigen Grundflächenaussenkontur der inneren Gehäusewand wird so der ringrohrförmige Strömungskanal begrenzt.

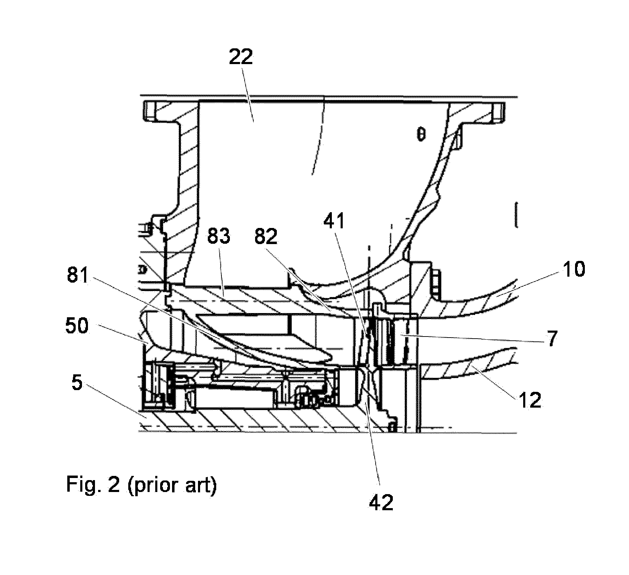

Unmittelbar stromaufwärts der Laufschaufeln 41 des Turbinenrades ist eine Leitvorrichtung 7, der sogenannte Düsenring, angeordnet, mit einer Vielzahl von form-oder kraftschlüssig mit zwei koaxial angeordneten Befestigungsringen verbundenen Leitschaufeln. Bei herkömmlichen Abgasturbinen dieser Bauart ist der Düsenring entweder am Gaseintrittsgehäuse oder am Gasaustrittsgehäuse befestigt. Das Gasaustrittsgehäuse umfasst neben einem grossen Sammelraum einen Diffusor, welcher den Strömungskanal stromab der Turbinenlaufschaufeln radial nach aussen begrenzt. Auf der gegenüberliegenden Seite wird der Strömungskanal durch ein am Lagergehäuse 51 befestigtes Gehäuseteil begrenzt, der sogenannten Haube. Im entlang der Wellenachse geführten Schnitt in Fig. 2 ist zu sehen, dass Haube 81 und Diffusor 82 den Strömungskanal begrenzen, welcher für die Umlenkung der Strömung aus der axialen in die radiale Richtung verantwortlich ist. Um die der Abgasströmung ausgesetzten und daher für die Wartung der Turbine relevanten Bauteile von der Wellenseite her ausbauen zu können, sind zwischen der am Rotorblock befestigten Haube 81 und dem Turbinendiffusor 82 Verbindungsstreben 83 eingesetzt. Die dadurch geschaffene Baugruppe kann mit Haubendiffusor bezeichnet werden. Dieser Haubendiffusor umfasst zwei rohrförmige Abschnitte, den am turbinenseitigen Ende radial aussenliegenden Diffusor 82 sowie die radial innenliegende Haube 81. Am wellenseitigen Ende des Haubendiffusors, das heisst an dem an den Sammelraum im Gasaustrittsgehäuse angrenzenden Bereich weisen die beiden rohrförmigen Abschnitte eine vergleichbare radiale Höhe auf, die beiden rohrförmigen Abschnitte sind somit gebogen und führen den Strömungskanal von der streng axialen Ausrichtung unmittelbar stromabwärts der Laufschaufeln 41 in die radiale Richtung über. Verbunden sind die beiden rohrförmigen Abschnitte des Haubendiffusors durch mehrere, entlang dem Umfang verteilt angeordneten Streben 83. Die Streben können zwischen Diffusor und Haube geschraubt, geschweisst, gelötet oder direkt eingegossen werden. Fertigungstechnisch ist es vorteilhaft, die gesamte Baugruppe Haubendiffusor als ein einziges Gussteil herzustellen.

An dem dem Turbinenrad zugewandten Ende des Turbinendiffusors 82 ist vorteilhafterweise der Düsenring 70 befestigt. Damit lässt sich der Düsenring beim Ausbau der nunmehr auch den Turbinendiffusor umfassenden Rotorbaugruppe ebenfalls zusammen mit der Turbinenscheibe aus dem Turbinengehäuse entfernen. Optional kann der Düsenring zusätzlich mit dem inneren Turbinengehäuse, der sogenannten Kalotte verbunden sein, so dass auch diese beim Ausbau mit der Rotorbaugruppe aus dem Turbinengehäuse gezogen werden kann. Alternativ, kann der am Turbinendiffusor befestigte Düsenring mechanisch vom inneren Turbinengehäuse entkoppelt sein, in diesem Fall kann es von Vorteil sein, wenn am Düsenring Mittel vorgesehen sein, welche eine Leckageströmung durch den radial inneren Bereich des Düsenrings verhindern, beispielsweise ein diese Kreisfläche schliessender Gehäusedeckel.

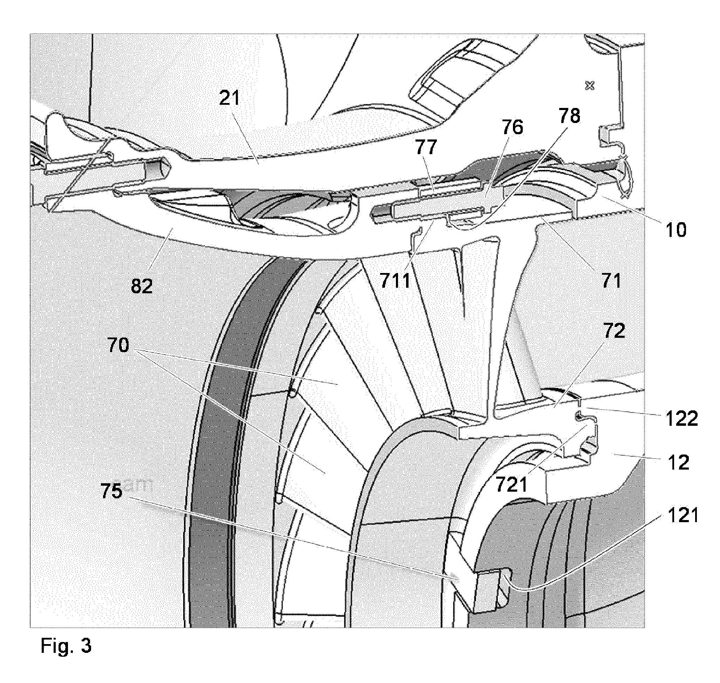

Fig. 3 zeigt eine Vergrösserung des Turbinenbereichs einer Axialturbine ohne das Turbinenrad. Der Düsenring setzt sich aus einem äusseren Ring 71 und einem inneren Ring 72 sowie einer Vielzahl zwischen den beiden Ringen angeordneten Leitschaufeln 70 zusammen. Die Leitschaufeln sind in Umfangsrichtung ungleich voneinander beabstandet, um die Erregung der Laufschaufeln des Turbinenrades und die Anfälligkeit bezüglich high cycle fatigue zu reduzieren. Optimalerweise ist der Düsenring dabei in zwei oder mehrere Segmente unterteilt, welche jeweils unterschiedlich viele Leitschaufeln pro Winkelbereich aufweisen. Beispielsweise weist ein Düsenring auf der einen Hälfte n gleichmässig verteilte Leitschaufeln auf, während auf der zweiten Hälfte n+1 ebenfalls gleichmässig aber mit einem etwas geringeren Abstand verteilte Leitschaufeln angeordnet sind.

Der Düsenring ist während der Montage/ Demontage über den äusseren Ring 71 mit der äussere Abdeckung des Strömungskanals verbunden, dem Diffusor 82. Dabei ist der Düsenring vorteilhafterweise lediglich in axialer Richtung fixiert, während er sich in Umfangsrichtung mit geringem Kraftaufwand bewegen lässt. In der Figur ist Haltevorrichtung angedeutet, welche radial ausserhalb zwar für einen axialen Formschuss, nicht aber für eine schlüssige Verbindung in Umfangsrichtung sorgt. Dabei ist ein radialer Vorsprung 711 am äusseren Ring 71 zwischen dem Diffusor 82 und einem von einem Befestigungsmittel 76 gehaltenen Abstandhalter in axialer Richtung umschlossen, wobei der Abstandhalter für einen ausreichenden Axialspalt 78 sorgt, welcher ein einfaches Drehen des Düsenrings während der Montage ermöglicht. Im Betriebszustand ist diese Haltevorrichtung ohne Bedeutung, da der Düsenring alsdann zwischen Gaseintrittsgehäuse und Diffusor 82 festgeklemmt ist.

Der radial innere Ring 72 des Düsenrings weist erfindungsgemäss eine Nocke 75 auf, welche zwei parallele, axial gerichtete Gleitflächen aufweist. Die Nocke 75 greift in einer dafür vorgesehenen, ebenfalls mit axial gerichteten Gleitflächen ausgestatteten Nut 121 in dem inneren Gaseintrittsgehäuse 12 ein. Optional weisen entweder die Gleitflächen der Nut 121 oder die Gleitflächen der Nocke 75 eine Fase (schräge Kante) auf, um die Einführung der Nocke in die Nut zu vereinfachen. Bei der Montage wird der Düsenring mit den korrekt positionierten Nocken in axialer Richtung an das Gaseintrittsgehäuse geschoben, wobei auf dem letzten Abschnitt des axialen Einschubs die Nocke in der Nut eingreift und so die korrekte relative Winkellage zwischen Düsenring und Gaseintrittsgehäuse gewährleistet.

Optional können mehrere Nocken und entsprechende Nuten vorgesehen sein, wobei diese vorteilhafterweise ungleichmässig entlang dem Umfang verteilt angeordnet sind, um eine nicht vorhergesehenen Winkellage zu vermeiden.

Alternativ oder zusätzlich können Nocken am äusseren Ring 71 und Nuten im äusseren Gaseintrittsgehäuse 10 vorgesehen sein.

Optional können Nocken und Nuten gemischt oder vertauscht sein, so dass die Nocken am Gaseintrittsgehäuse angeordnet und die Nuten in den oder die Ringe des Düsenrings eingelassen sind oder sowohl Nocken als auch Nuten am Düsenring und entsprechend Nuten und Nocken am Gaseintrittsgehäuse vorgesehen sind.

Der Düsenring gemäss der Ausführung nach Fig. 3 weist an seinem inneren Ring 72 einen Dichtungsvorsprung 721 auf, welcher im kalten Zustand der Abgasturbine mit radialem Spiel in axialer Überlappung zu einem Dichtungsvorsprung 122 am Gaseintrittsgehäuse 12 angeordnet ist. Erhitzt sich im Betrieb der Düsenring stärker als das Gaseintrittsgehäuse, dehnt sich der innere Befestigungsring 72 stärker in radialer Richtung als das Gaseintrittsgehäuse 12, so dass die beiden Dichtungsvorsprünge122 und 721 nunmehr in radialer Richtungen gegeneinander gepresst werden, wodurch sich eine Dichtstelle zwischen Gaseintrittsgehäuse 12 und Düsenring ergibt, die verhindert, dass eine unerwünschte Leckage-Strömung in den Bereich der Turbinennabe entweicht.

Die erfindungsgemässe Positionierungsmittel können auch eingesetzt werden, wenn der Düsenring über den Diffusor am Gasaustrittsgehäuse befestigt ist, wie dies in Fig. 3 angedeutet ist. In diesem Fall wird der Düsenring zusammen mit dem Diffusor ausgebaut, nachdem die Rotorgruppe ausgebaut worden ist.

### Bezugszeichenliste

- 1: Gaseintrittsgehäuse
- 10: äussere Gehäusewand
- 11: Steg
- 12: innere Gehäusewand (Kalotte)
- 121: Positionierungsmittel, Nut
- 122: Dichtungsvorsprung
- 21, 22: Gasaustrittsgehäuses
- 4: Turbinenrad
- 41: Laufschaufeln
- 42: Nabe
- 5: Welle
- 50, 51: Lagergehäuse
- 6: Verdichterrad
- 61: Verdichtergehäuse
- 7: Leitvorrichtung (Düsenring)
- 70: Leitschaufeln des Düsenrings
- 71: Äusserer Ring
- 711: Vorsprung
- 72: Innerer Ring
- 721: Dichtungsvorsprung
- 75: Positionierungsmittel, Nocke
- 76: Befestigungsmittel
- 77: Abstandhalter (Bracket)
- 78: Axialspalt
- 81: Haube
- 82: Diffusor
- 83: Strebe zur Befestigung des Diffusors an der Haube

## Patentansprüche

1. Düsenring für die Axialturbine eines Abgasturboladers, umfassend einen inneren Ring (72) und einen äusseren Ring (71) sowie eine Vielzahl zwischen dem inneren und dem äusseren Ring befestigte Leitschaufeln (70), wobei die Leitschaufeln zumindest teilweise mit unterschiedlichen Abständen zueinander angeordnet sind, **dadurch gekennzeichnet, dass** zumindest an einem der beiden Ringe (71, 72) mindestens ein Positionierungsmittel (75) vorgesehen ist, anhand dessen, wenn es in axialer Richtung in ein entsprechendes Positionierungsmittel an einem Gaseintrittsgehäuse eingeschoben ist, die Lage des Düsenrings bezüglich des Gaseintrittsgehäuses eindeutig festlegen lässt.

2. Düsenring nach Anspruch 1, wobei jeweils mehrere Positionierungsmitteln vorgesehen sind, welche in Umfangsrichtung unregelmässig verteilt angeordnet sind.

3. Düsenring nach Anspruch 1 oder 2, wobei als Positionierungsmittel eine Nocke (75) zum Zusammenwirken mit einer entsprechenden Nut (121) und/ oder eine Nut zum Zusammenwirken mit einer entsprechenden Nocke vorgesehen ist.

4. Axialturbine eines Abgasturboladers, umfassend ein Gaseintrittsgehäuse (10, 12), welches einen ringkanalförmigen Strömungskanal umschliesst, einen den Strömungskanal stromabwärts eines Turbinenrades begrenzenden Diffusor (82), sowie einen an dem Diffusor befestigten, stromaufwärts des Turbinenrades angeordneten Düsenring nach einem der Ansprüche 1 bis 3, wobei das Gaseintrittsgehäuse mindestens ein Positionierungsmittel (121) zur Aufnahme des mindestens einen Positionierungsmittels (75) am Düsenring aufweist.

5. Axialturbine nach Anspruch 4, wobei als Positionierungsmittel am Düsenring mindestens eine Nocke ausgebildet ist, und wobei als Positionierungsmittel am Gaseintrittsgehäuse (12) mindestens eine Nut (121) vorgesehen ist, wobei sich die Nocke (75) in axialer Richtung in die Nut einschieben lässt.

6. Axialturbine nach Anspruch 4, wobei als Positionierungsmittel in den Düsenring mindestens eine Nut eingelassen ist, und wobei als Positionierungsmittel am Gaseintrittsgehäuse mindestens eine Nocke ausgebildet ist, wobei sich die Nocke in axialer Richtung in die Nut einschieben lässt.

7. Axialturbine nach einem der Ansprüche 4 bis 6, wobei der innere Ring (72) einen umlaufenden Dichtungsvorsprung (721) aufweist, welcher sich beim Montieren mit radialem Spiel in axialer Überlappung mit einem umlaufenden Dichtungsvorspruch (122) am Gaseintrittsgehäuse (12) positionieren lässt, wobei der Dichtungsvorsprung (721) am inneren Ring (72) im Betrieb aufgrund der grösseren Erhitzung des Düsenrings gegenüber der Erhitzung des Gaseintrittsgehäuses radial am Dichtungsvorsprung (122) am Gaseintrittsgehäuse (12) aufliegt.

8. Axialturbine nach einem der Ansprüche 4 bis 7, wobei der äussere Ring (72) in axialer Richtung formschlüssig, in Umfangsrichtung jedoch drehbar am Diffusor (82) befestigt ist.
